# EUROPEAN PATENT APPLICATION

(11) **EP 4 017 103 A1**
(43) Date of publication of application: **22.06.2022**
(21) Application number: 20855315.6
(22) Date of filing: 09.05.2020
(51) Int. Cl.: H04W 36/00, H04W 36/08, H04W 72/04

(54) **INFORMATION TRANSMISSION METHOD AND APPARATUS, STORAGE MEDIUM AND ELECTRONIC APPARATUS**

(30) Priority: 16.08.2019 CN 201910759558
(71) Applicant: ZTE Corporation, Shenzhen, Guangdong 518057 (CN)
(72) Inventor: YANG, Li, Shenzhen, Guangdong 518057 (CN); FANG, Jianmin, Shenzhen, Guangdong 518057 (CN); LI, Dapeng, Shenzhen, Guangdong 518057 (CN)
(74) Representative: Brunazzi, Stefano
(86) International application number: PCT/CN2020/089316
(87) International publication number: WO 2021/031624

(57) **Abstract**

Provided are an information transmission method and apparatus, a storage medium and an electronic apparatus. The information transmission method includes: in a process that User Equipment (UE) executes local condition evaluation for Conditional Handover (CHO) and executes the CHO, measuring and recording Random Access Channel (RACH) access procedure information about the UE executing RACH access to at least one candidate target cell or at least one candidate target beam; and sending the RACH access procedure information to a source cell or source base station node of the UE.

## Description

This application claims priority to Chinese Patent Application No. 201910759558.0, filed with the Chinese Patent- Office on 16 August 2019, the disclosure of which is incorporated herein by reference in its entirety.

### Technical Field

The present invention relates to the field of communications, and in particular, to an information transmission method and apparatus, a storage medium and an electronic apparatus.

### Background

As a continuation development of a fourth generation terrestrial 4G (4^{th} Generation) LTE (Long-Term Evolution) cellular mobile communication system, a fifth generation terrestrial 5G (5^{th} Generation) cellular mobile communication system includes two major subsystems: a 5GC (5G Core) and an NG-RAN (Next Generation Radio Access Network).

The 5GC includes network entities or nodes such as an AMF (Access Mobility Function), a SMF (Session Management Function) and a UPF (User Plane Function). The NG-RAN includes base stations (also referred to as nodes hereinafter) of at least two different RAT (Radio Access Technology) types: an ng-eNB (Next Generation eNB) which is a smooth evolution based on a 4G eNB (evolved NodeB), and a gNB (next Generation NodeB) designed with a new physical layer air interface. The NG-RAN further includes a logical interface between related network element node entities, wherein an air interface of the ng-eNB still supports an E-UTRA (Evolved Universal Terrestrial Radio Access) RAT mode, and an air interface of the gNB supports an NR (New Radio) RAT mode.

An NG-RAN base station (also referred to as an NG-RAN node, for example, a gNB or an ng-eNB) is in bidirectional connection with a 5GC via a standardized NG interface. The bidirectional connection includes an NG-Control Plane (a control panel connection between the NG-RAN and the 5GC) (used for executing signalling transmission) and an NG-User Plane (a user plane connection between the NG-RAN and the 5GC) (used for user data transmission). The NG-RAN base stations are in bidirectional connection with each other via an Xn interface. The bidirectional connection includes an Xn-Control Plane (a control plane connection between NG-RAN base stations) and an Xn User Plane (a user plane connection between NG-RAN base stations).

For a CU/DU (Centralized Unit/Distributed Unit) air interface protocol stack of a base station, there are two scenarios in which the CU/DU air interface protocol stack is separated or not separated.

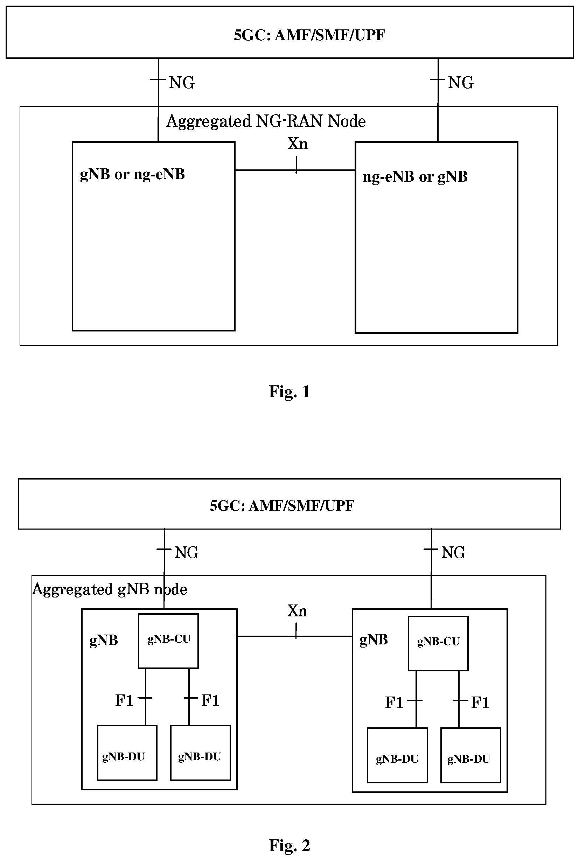

Fig. 1 is a diagram of the network architecture in a scenario that a CU/DU air interface protocol stack of an Aggregated NG-RAN base station is not separated, and Fig. 2 is a diagram of the network architecture in a scenario that a gNB CU/DU air interface protocol stack of a Disaggregated NG-RAN base station is separated.

Taking the separation of the gNB-CU/DU supported by the current 3GPP (3^{rd} Generation Partnership Project) as an example, a single gNB is separated into network node entities including a single gNB-CU and multiple gNB-DUs. The network node entities are in bidirectional connection with each other via a standardized F1 interface, and the bidirectional connection includes an F1-Control Plane connection and an F1-User Plane connection. The logic interfaces, presented to the outside, of the gNB with CU/DU separated and the gNB/ng-eNB with CU/DU not separated are still the NG and Xn interfaces. The control plane connection of each network side logic interface (NG, Xn, F1) is used for transmitting control signalling messages between network entities or nodes, and the user plane connection is used for transmitting user service data (packets). NGAP (NG Application Protocol), XnAP (Xn Application Protocol), and F1AP (F1 Application Protocol) respectively adopt NG-C, Xn-C, and F1-Control Plane RNL (Radio Network Layer) logical network application layer protocols, and respectively specify signalling flow messages on various logical interfaces.

The NG-RAN base station maintains the continuity of communication services of terminal users by means of a handover procedure, i.e. a communication context of a terminal UE (User Equipment) is migrated from a source serving base station/cell (Source Node/ Source Cell) to a target serving base station/cell (Target Node/ Target Cell) as smoothly as possible. The handover procedure generally includes three phases: "handover preparation", "handover execution", and "handover completion". In the "handover preparation" phase, the source serving base station/cell negotiates with the target serving base station/cell based on the signaling flow of the logical network interface to determine a reservation configuration of communication resources of the target side and configuration content of a handover command. In the "handover execution" phase, the source serving base station/cell sends an RRC (Radio Resource Control) air interface signalling containing an air interface handover command to UE, and the UE attempts to perform a handover operation to the designated target base station/cell. In the "handover completion" phase, the source serving base station/cell and the target serving base station/cell perform signaling negotiation to notify each other of a handover result and release UE communication context and communication resources no longer needed by the source serving base station/cell.

In a non-conditional handover procedure, the two phases of "handover preparation" and "handover execution" are continuous in time, i.e. the time interval between the "handover preparation" and the "handover execution" is not long. The source cell sends a Measurement Report based on a radio measurement result of the UE and reports a local RRM (Radio Resource Management) policy, and starts a "handover preparation" phase. After the designated target base station/cell (usually only one target primary node and one target primary serving cell) completes reservation configuration of the target side resources related to the "handover preparation" phase, the source cell immediately starts the "handover execution" phase via an air interface, and the UE executes a handover command to attempt to be handed over to the target base station/cell. Therefore, the "actual handover moment" of the UE and the moment of reception of the air handover command are closely consecutive. The air interface handover command sent by the source cell is sent to the UE only when the UE and the network side simultaneously satisfy an "actual handover condition". The "actual handover condition" herein may include: the wireless signal quality of the designated target base station/cell is good enough, enough communication resources are reserved and reasonably configured, and after the UE is successfully handed over to the target base station/cell, the continuity of at least a part of the services can be maintained.

The above non-conditional handover mechanism is originally designed for deployments of low-frequency band and non-intensive cells. With the capacity expansion of network evolution, a heterogeneous network (HetNet) is deployed above a homogeneous network, for example, many Small Cells are also deployed within the coverage range of a cellular macro cell. In a 5G system, high-frequency band resources up to 100 GHz are used in addition to low-frequency band resources, and these high-frequency cells can only be deployed as a Small Cell Cluster in the form of dense small cells. Under the above background and new requirements, a CHO (Conditional Handover) mechanism is introduced by the 3GPP standards. In a conditional handover procedure, the two phases of "CHO handover preparation" and "CHO handover execution" are largely separated in time, i.e. a long time interval between the "CHO handover preparation" and the "CHO handover execution" is allowed. The source cell sends a Measurement Report based on a radio measurement report of the UE and reports a local RRM strategy, starts a "CHO handover preparation" phase, requests a plurality of potential/candidate target base station/cells to complete reservation configuration of target side resources and related parameter setting related to the "CHO handover preparation" phase, and sends CHO preconfiguration information and related parameters to the UE in advance through air interface RRC signalling. Subsequently, the source cell does not immediately start the "CHO handover execution", and the UE also does not immediately perform the CHO handover operation to a certain suitable target base station/cell, but waits until later time when a certain UE locally evaluates that the "actual handover condition" is satisfied and the UE performs the CHO handover operation to the certain suitable target base station/cell. Therefore, the "actual handover moment" of the UE and the moment of reception of the air interface CHO handover command are discontinuous. By means of the CHO mechanism, a source cell can perform reservation configuration for a plurality of target side (cell) resources in advance when a radio link condition of the source cell is good (for example, the UE is not in the cell edge), and UE selects, according to a local dynamic condition, to be handed over to a most suitable target cell, thereby reducing the probability of handover failure and improving the service experience of a user. Since a CHO preconfiguration operation may relate to a plurality of neighbor potential/candidate target base stations, the source base station will not start a data forwarding operation in advance, otherwise it is possible to perform unnecessary data forwarding to a plurality of potential/candidate target base stations which are not the final target base station, resulting in a waste of network side resources.

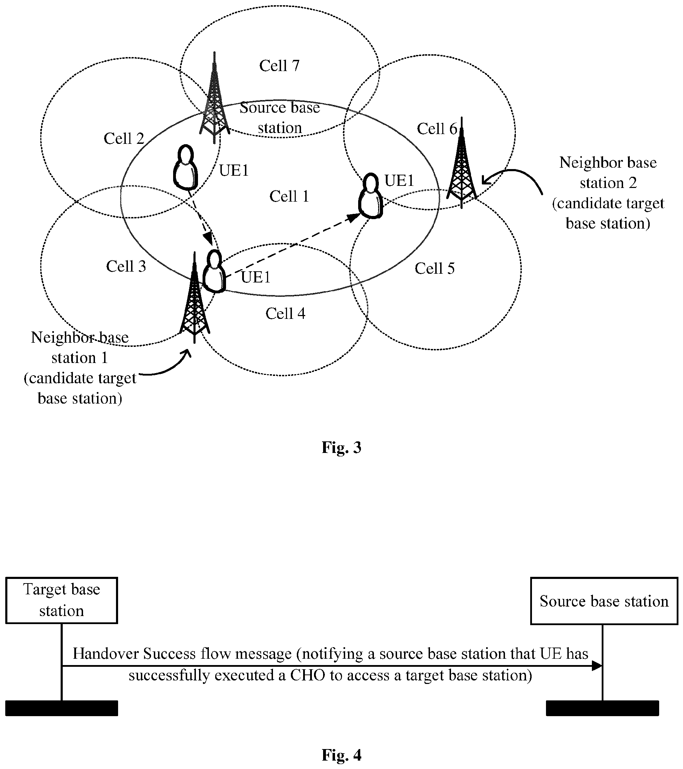

As shown in Fig. 3, a source base station locally dominates serving cells Cell1, Cell2 and Cell7, and has two neighbor base stations (Neighbor Node), i.e., neighbor base station 1 (dominating Cell3 and Cell4) and neighbor base station 2 (dominating Cell5 and Cell6), and any of the neighbor base stations may become a target base station (previously referred to as potential/candidate target base stations) of a specific UE. With the random movement of the UE, when the UE finally satisfies a CHO actual handover condition of a certain neighbor base station/local serving cell, the UE starts to attempt to perform the CHO handover, and attempts to access a certain target base station/serving cell. Such attempt may be successful, and may also fail. As shown in Fig. 4, after the CHO is successfully executed, in order to implement an efficient data forwarding transmission operation, a final target base station of the UE notifies the source base station of a CHO execution complete event of the UE through a Handover Success message, and the source base station starts to perform the data forwarding transmission operation towards the final target base station, thereby avoiding an unnecessary data forwarding transmission operation.

Since the CHO may involve resource preconfiguration and related parameter setting of a plurality of different potential neighbor/candidate target base stations/serving cells, if the source base station is not managed appropriately in this regard, network resource waste and system performance degradation may be caused.

Therefore, a problem of network resource waste and system performance degradation caused by inappropriate resource preconfiguration and parameter setting provided by a source base station for a CHO handover procedure of UE exists in the related art.

### Summary

Embodiments of the present invention provide an information transmission method and apparatus, a storage medium and an electronic apparatus, which can at least solve the problem of network resource waste and system performance degradation caused by inappropriate resource preconfiguration and parameter setting provided by a source base station for a CHO handover procedure of UE in the related art.

According to an embodiment of the present invention, provided is an information transmission method, including: in a process that UE executes local condition evaluation for CHO and executes the CHO, measuring and recording Random Access Channel (RACH) access procedure information about the UE executing RACH access to at least one candidate target cell or at least one candidate target beam; and sending the RACH access procedure information to a source cell or source base station node of the UE.

In at least one exemplary embodiment, sending the RACH access procedure information to a source cell or source base station node of the UE includes: in a case where the UE successfully accesses the at least one candidate target cell or the at least one candidate target beam, reporting the RACH access procedure information to a target cell or target base station node through a first Radio Resource Control (RRC) uplink message, so as to send the RACH access procedure information to the source cell or source base station node of the UE through the target cell or target base station node via an inter-base station interface; or, in a case where the UE fails to successfully access any one of the at least one candidate target cell or the at least one candidate target beam, reporting the RACH access procedure information to the source cell or source base station node through a second RRC uplink message.

In at least one exemplary embodiment, the first RRC uplink message is one of: a CHO handover completion message of the UE, or a UE specific flow message after handover completion of the CHO; or, the second RRC uplink message is one of: a CHO handover completion message of the UE, or a UE specific flow message after handover completion of the CHO.

In at least one exemplary embodiment, the RACH access procedure information includes at least one of: user position related information, candidate target cell identification information or candidate target beam identification information for indicating the at least one candidate target cell or the at least one candidate target beam; information indicating whether the UE successfully completes the RACH access to one candidate target cell of the at least one candidate target cell or one candidate target beam of the at least one candidate target beam; information indicating a number of times the UE attempts to perform the RACH access to the at least one candidate target cell or the at least one candidate target beam and a time stamp for execution of each RACH access; information indicating a reason for rejection of an attempt of the UE to perform the RACH access to one candidate target cell of the at least one candidate target cell or one candidate target beam of the at least one candidate target beam; and information indicating a process time taken for the UE to successfully perform the RACH access to one candidate target cell of the at least one candidate target cell or one candidate target beam of the at least one candidate target beam and information of user service transmission interruption time.

In at least one exemplary embodiment, in the process that the UE executes the local condition evaluation for the CHO and executes the CHO, the method further includes at least one of the following: recording first Radio Resource Management (RRM) measurement result information of the source cell or a source beam of the UE; and recording second RRM measurement result information of the candidate target cell or the candidate target beam of the UE.

In at least one exemplary embodiment, the first RRM measurement result information is latest or most recent RRM measurement result information acquired by the UE by performing measurement on the source cell or the source beam, and the first RRM measurement result information is based on a Synchronization Signal Block (SSB) signal or a Channel State Information Reference Signal (CSI-RS); or, the second RRM measurement result information is latest or most recent RRM measurement result information acquired by the UE by performing measurement on the candidate target cell or the candidate target beam, and the second RRM measurement result information is based on an SSB signal or a CSI-RS.

According to another embodiment of the present invention, provided is an information transmission method, including: receiving RACH access procedure information sent by UE or a target cell or target base station node of the UE, wherein the RACH access procedure information is procedure information, measured and recorded by the UE in a process that the UE executes local condition evaluation for CHO and executes the CHO, about the UE executing RACH access to at least one candidate target cell or at least one candidate target beam.

In at least one exemplary embodiment, before receiving RACH access procedure information sent by UE or a target cell or target base station node of the UE, the method further includes: sending a first interface signalling flow message to the target cell or target base station node of the UE, wherein the first interface signalling flow message is used for requesting the target cell or target base station node of the UE to send the RACH access procedure information measured and recorded by the UE in the process that the UE executes the local condition evaluation for the CHO and executes the CHO.

In at least one exemplary embodiment, after sending a first interface signalling flow message to the target cell or target base station node of the UE, the method further includes: receiving a second interface signalling flow message sent by the target cell or target base station node, wherein the second interface signalling flow message carries the RACH access procedure information, or the second interface signalling flow message carries indication information for indicating a failure in and a failure reason for acquiring the RACH access procedure information.

In at least one exemplary embodiment, before receiving RACH access procedure information sent by UE or a target cell or target base station node of the UE, the method further includes: sending a conditional handover command to the UE, wherein the conditional handover command carries CHO configuration information, the CHO configuration information includes information of the at least one candidate target cell or the at least one candidate target beam, and the conditional handover command is used for instructing the UE to execute the CHO according to the CHO configuration information.

According to another embodiment of the present invention, provided is an information transmission method, including: in a case where UE is handed over, through CHO, from a source cell to a target cell or from a source beam to a target beam, receiving RACH access procedure information reported by the UE, wherein the RACH access procedure information is procedure information, measured and recorded by the UE in a process that the UE executes local condition evaluation for the CHO and executes the CHO, about the UE executing RACH access to at least one candidate target cell or at least one candidate target beam; and sending the RACH access procedure information to the source cell or a source base station node.

In at least one exemplary embodiment, before sending the RACH access procedure information to the source cell or a source base station node, the method further includes: receiving authorization information configured by the source cell or source base station node, wherein the authorization information is used for indicating that the target cell or target base station node is authorized to actively push the RACH access procedure information to the source cell or source base station node.

In at least one exemplary embodiment, sending the RACH access procedure information to the source cell or a source base station node includes: sending the RACH access procedure information to the source cell or source base station node through a handover success flow message or other interface signalling flow message between base stations except the handover success flow message.

In at least one exemplary embodiment, receiving RACH access procedure information reported by the UE includes: receiving the RACH access procedure information reported by the UE through a first RRC uplink message.

According to another embodiment of the present invention, provided is an information transmission apparatus, including: a first recording module, configured to measure and record, in a process that UE executes local condition evaluation for CHO and executes the CHO, RACH access procedure information about the UE executing RACH access to at least one candidate target cell or at least one candidate target beam; and a first sending module, configured to send the RACH access procedure information to a source cell or source base station node of the UE.

In at least one exemplary embodiment, the first sending module includes: a first reporting unit, configured to report, in a case where the UE successfully accesses the at least one candidate target cell or the at least one candidate target beam, the RACH access procedure information to a target cell or target base station node through a first RRC uplink message, so as to send the RACH access procedure information to the source cell or source base station node of the UE through the target cell or target base station node via an inter-base station interface; or, a second reporting unit, configured to report, in a case where the UE fails to successfully access any one of the at least one candidate target cell or the at least one candidate target beam, the RACH access procedure information to the source cell or source base station node through a second RRC uplink message.

In at least one exemplary embodiment, the apparatus further includes at least one of: a second recording module, configured to record first RRM measurement result information of the source cell or a source beam of the UE in the process that the UE executes the local condition evaluation for the CHO and executes the CHO; and a third recording module, configured to record second RRM measurement result information of the candidate target cell or the candidate target beam of the UE in the process that the UE executes the local condition evaluation for the CHO and executes the CHO.

According to another embodiment of the present invention, provided is an information transmission apparatus, including: a first receiving module, configured to receive RACH access procedure information sent by UE or a target cell or target base station node of the UE, wherein the RACH access procedure information is procedure information, measured and recorded by the UE in a process that the UE executes local condition evaluation for CHO and executes the CHO, about the UE executing RACH access to at least one candidate target cell or at least one candidate target beam.

In at least one exemplary embodiment, the apparatus further includes: a second sending module, configured to send, before receiving the RACH access procedure information sent by the UE or the target cell or target base station node of the UE, a first interface signalling flow message to the target cell or target base station node of the UE, wherein the first interface signalling flow message is used for requesting the target cell or target base station node of the UE to send the RACH access procedure information measured and recorded by the UE in the process that the UE executes the local condition evaluation for the CHO and executes the CHO.

In at least one exemplary embodiment, the apparatus further includes: a second receiving module, configured to receive, after sending the first interface signalling flow message to the target cell or target base station node of the UE, a second interface signalling flow message sent by the target cell or target base station node, wherein the second interface signalling flow message carries the RACH access procedure information, or the second interface signalling flow message carries indication information used for indicating a failure in and a failure reason for acquiring the RACH access procedure information.

In at least one exemplary embodiment, the apparatus further includes: a third sending module, configured to send, before receiving the RACH access procedure information sent by the UE or the target cell or target base station node of the UE, a conditional handover command to the UE, wherein the conditional handover command carries CHO configuration information, the CHO configuration information includes the at least one candidate target cell or the at least one candidate target beam, and the conditional handover command is used for instructing the UE to execute the CHO according to the CHO configuration information.

According to another embodiment of the present invention, provided is an information transmission apparatus, including: a third receiving module, configured to receive, in a case where UE is handed over, through CHO, from a source cell to a target cell or from a source beam to a target beam, RACH access procedure information reported by the UE, wherein the RACH access procedure information is procedure information, measured and recorded by the UE in a process that the UE executes local condition evaluation for the CHO and executes the CHO, about the UE executing RACH access to at least one candidate target cell or at least one candidate target beam; and a fourth sending module, configured to send the RACH access procedure information to the source cell or a source base station node.

In at least one exemplary embodiment, the apparatus further includes: a fourth receiving module, configured to receive, before sending the RACH access procedure information to the source cell or source base station node, authorization information configured by the source cell or source base station node, wherein the authorization information is used for indicating that the target cell or target base station node is authorized to actively push the RACH access procedure information to the source cell or source base station node.

In at least one exemplary embodiment, the fourth sending module includes: a sending unit, configured to send the RACH access procedure information to the source cell or source base station node through a handover success flow message or other interface signalling flow message between base stations except the handover success flow message.

In at least one exemplary embodiment, the third receiving module includes: a receiving unit, configured to receive the RACH access procedure information reported by the UE through a first RRC uplink message.

According to yet another embodiment of the present invention, provided is a storage medium, wherein the storage medium stores a computer program, and the computer program is configured to execute the operations in any one of the method embodiments at runtime.

According to yet another embodiment of the present invention, provided is an electronic apparatus, including a memory and a processor, wherein the memory stores a computer program, and the processor is configured to run the computer program so as to execute the operations in any one of the method embodiments.

By means of the embodiments of the present invention, in a process that UE executes local condition evaluation for CHO and executes the CHO, RACH access procedure information about the UE executing RACH access to at least one candidate target cell or at least one candidate target beam is measured and recorded; and the RACH access procedure information is sent to a source cell or source base station node of UE. The source cell or source base station node can acquire the RACH access procedure information about the UE executing the RACH access to the at least one candidate target cell or the at least one candidate target beam, so that the source base station can not only learn what the UE has experienced in the process of executing the CHO, but can also learn a comprehensive wireless environment condition of neighbor cells, so as to optimize CHO configuration (resource reservation, parameter setting, etc.) of other UEs under the source base station, reduce prohibitive and redundant preconfiguration of target side resources of a network, accurately set priorities of different potential/candidate target base stations/serving cells, reduce CHO handover determination time delay of UE and improve handover robustness, etc., and therefore the problem of network resource waste and system performance degradation caused by inappropriate resource preconfiguration and parameter setting provided by a source base station for a CHO handover procedure of UE in the related art can be solved, thereby achieving the effects of avoiding network resource allocation and reservation waste, improving system performance and improving CHO operation efficiency of UE.

### Brief Description of the Drawings

Fig. 1 is a diagram of the network architecture of an Aggregated NG-RAN base station in the related art;
Fig. 2 is a diagram of the network architecture of a Disaggregated gNB base station in the related art;
Fig. 3 is a schematic diagram of cross-node conditional handover pre-configuration resource management;
Fig. 4 is a schematic diagram of a target base station notifying a source base station of CHO completion through a handover procedure;
Fig. 5 is a structural block diagram of hardware of UE involved in an information transmission method according to some embodiments of the present invention;
Fig. 6 is a flowchart of an exemplary information transmission method according to some embodiments of the present invention;
Fig. 7 is a flowchart of another exemplary information transmission method according to some embodiments of the present invention;
Fig. 8 is a flowchart of still another exemplary information transmission method according to some embodiments of the present invention;
Fig. 9 is a flowchart of still another exemplary information transmission method according to some embodiments of the present invention;
Fig. 10 is a flowchart of still another exemplary information transmission method according to some embodiments of the present invention;
Fig. 11 is a flowchart of still another exemplary information transmission method according to some embodiments of the present invention;
Fig. 12 is a flowchart of still another exemplary information transmission method according to some embodiments of the present invention;
Fig. 13 is a flowchart of still another exemplary information transmission method according to some embodiments of the present invention;
Fig. 14 is a flowchart of still another exemplary information transmission method according to some embodiments of the present invention;
Fig. 15 is a structural block diagram of an exemplary information transmission apparatus according to some embodiments of the present invention;
Fig. 16 is a structural block diagram of another exemplary information transmission apparatus according to some embodiments of the present invention;
Fig. 17 is a structural block diagram of still another exemplary information transmission apparatus according to some embodiments of the present invention.

### Detailed Description

The present invention is described below in detail with reference to the drawings and in conjunction with the embodiments. It is to be noted that embodiments in the present application and characteristics in the embodiments may be combined to derive other embodiments not explicitly described.

It is to be noted that the terms "first", "second" and the like in the specification, the claims and the drawings of the present invention are used to distinguish similar objects, and are not used to describe a specific sequence or a precedence order.

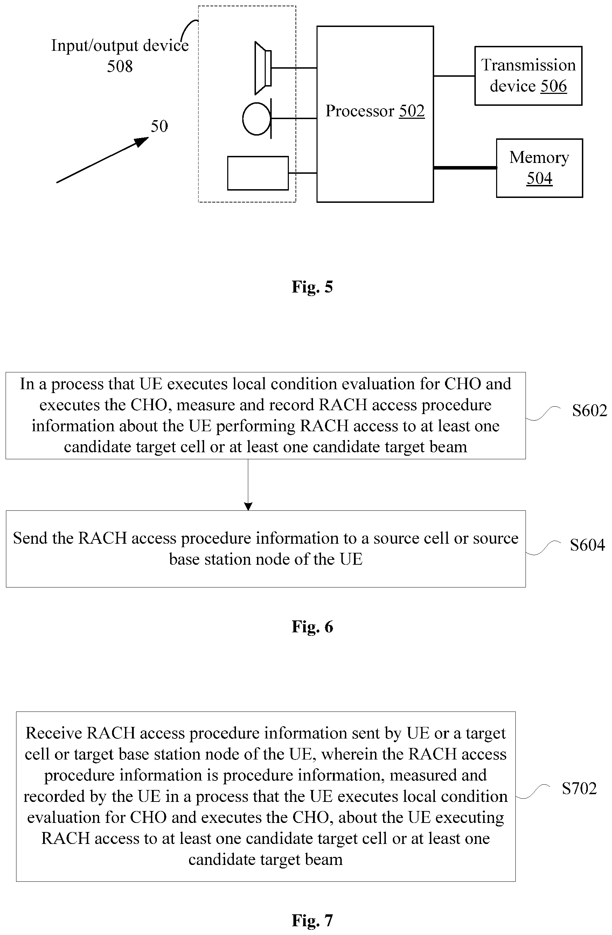

The method embodiments provided in the embodiments of the present application may be executed in UE, a source base station, a target base station, or a similar apparatus. Taking running on UE as an example, Fig. 5 is a structural block diagram of hardware of UE involved in an information transmission method according to some embodiments of the present invention. As shown in Fig. 5, the UE 50 may include one or more (only one is shown in Fig. 5) processors 502 (the processors 502 may include processing apparatuses such as a Microprocessor Control Unit (MCU) or a Field Programmable Gate Array (FPGA)) and a memory 504 for storing data. In at least one exemplary embodiment, the UE may further include a transmission device 506 for implementing a communication function and an input/output device 508. A person of ordinary skill in the art can understand that the structure shown in Fig. 5 is merely exemplary, and does not limit the structure of the foregoing UE. For example, the UE 50 may also include more or fewer modules than shown in Fig. 5, or have a different configuration than that shown in Fig. 5.

The memory 504 may be configured to store a computer program, for example, a software program and a module of application software, such as a computer program corresponding to the information transmission method in the embodiments of the present invention. The processor 502 executes various function applications and data processing by running the computer program stored in the memory 504, thereby implementing the foregoing method. The memory 504 may include highspeed random access memory, and may also include non-volatile memory, such as one or more magnetic storage devices, flash memories, or other non-volatile solid-state memories. In some examples, the memory 504 may include one or more memories remotely located with respect to the processor 502, which may be connected to the UE 50 over a network. Examples of such networks include, but are not limited to, Internet, intranets, local area networks, mobile communication networks, and combinations thereof.

The transmission device 506 is used to receive or send data via a network. Specific examples of the network described above may include a wireless network provided by a communication provider of the UE 50. In one example, the transmission device 506 may include a Network Interface Controller (NIC) that may be coupled to other network devices via a base station to communicate with the Internet. In one example, the transmission device 506 may be a Radio Frequency (RF) module for communicating wirelessly with the Internet.

Provided is an information transmission method running on the UE. Fig. 6 is a flowchart of an exemplary information transmission method according to some embodiments of the present invention. As shown in Fig. 6, the flow includes the following operations S602 and S604:
At S602, in a process that UE executes local condition evaluation for CHO and executes the CHO, RACH access procedure information about the UE executing RACH access to at least one candidate target cell or at least one candidate target beam is measured and recorded.

At S604, the RACH access procedure information is sent to a source cell or source base station node of the UE.

By means of the operations, in a process that UE executes local condition evaluation for CHO and executes the CHO, RACH access procedure information about the UE executing RACH access to at least one candidate target cell or at least one candidate target beam is measured and recorded; and the RACH access procedure information is sent to a source cell or source base station node of UE. The problem of network resource waste and system performance degradation caused by inappropriate resource preconfiguration and parameter setting provided by a source base station for a CHO handover procedure of UE in the related art can be solved, and the effects of avoiding network resource allocation and reservation waste, improving system performance and improving CHO operation efficiency of UE can be achieved.

In at least one exemplary embodiment, the entity for executing the foregoing operations may be, but is not limited to, UE (a user terminal), and the like.

In the above operation S602, in the process that the UE executes the local condition evaluation for the CHO and executes the CHO, the RACH access procedure information about the UE executing the RACH access to the at least one candidate target cell or the at least one candidate target beam is measured and recorded.

In order to perform conditional handover, both the UE and the base station need to support a CHO mechanism. The CHO operation of the UE involves different neighbor base stations or nodes, for example, at least one source base station and at least one potential/candidate target base station exist. The UE is already in the CHO related preconfiguration and operation, i.e. at least one potential/candidate target cell has been preconfigured for the CHO of the UE in at least one target base station.

Before performing the CHO handover, the UE resides in a source cell or source beam of the source base station (for 5G, the UE may reside in a source beam of the source base station). A source base station locally dominates a plurality of serving cells, and the source cell of the UE is one of the plurality of serving cells of the source base station.

In the conditional handover procedure, the two phases of "CHO handover preparation" and "CHO handover execution" are separated in time, allowing a large time interval between the "CHO handover preparation" and the "CHO handover execution".

A source cell or source base station node receives a Measurement Report reported by the UE based on a radio measurement result of the UE and a local RRM strategy, starts the "CHO handover preparation" flow, requests a plurality of potential/candidate target base stations/cells to complete target side resource reservation configuration and related parameter setting related to the "CHO handover preparation" flow, and sends CHO preconfiguration information and related parameters to the UE in advance through air interface RRC signalling. The CHO preconfiguration information and related parameters may include identification information of at least one potential target cell (or at least one candidate target cell) or at least one potential target beam (or at least one candidate target beam).

In a process that the UE performs the CHO handover, the UE may sequentially attempt to perform RACH access to the at least one candidate target cell or the at least one candidate target beam for multiple times, and information about the process of performing the CHO has an auxiliary reference effect on a source base station side.

In the process that the UE executes the local condition evaluation for the CHO and executes the CHO, the UE may measure and record the RACH access procedure information about the UE executing the RACH access to the at least one candidate target cell or the at least one candidate target beam.

In an exemplary embodiment, the RACH access procedure information may include at least one of:
(1) user position related information, candidate target cell identification information or candidate target beam identification information for indicating the at least one candidate target cell or the at least one candidate target beam;
(2) information indicating whether the UE successfully completes the RACH access to one candidate target cell of the at least one candidate target cell or one candidate target beam of the at least one candidate target beam;
(3) information indicating a number of times the UE attempts to perform the RACH access to the at least one candidate target cell or the at least one candidate target beam and a time stamp for execution of each RACH access;
(4) information indicating a reason for rejection of an attempt of the UE to perform the RACH access to one candidate target cell of the at least one candidate target cell or one candidate target beam of the at least one candidate target beam; and
(5) information indicating a process time taken for the UE to successfully perform the RACH access to one candidate target cell of the at least one candidate target cell or one candidate target beam of the at least one candidate target beam and information of user service transmission interruption time.

For example, in a local condition evaluation and execution process of a CHO handover, the UE tracks and records the RACH access procedure information about each RACH access attempt to a certain potential/candidate target cell. The RACH access procedure information at least includes, for example, which target cells or target beams has the UE attempted to perform CHO access to; whether related RACH access is finally successfully completed for a certain target cell or target beam; how many times of RACH access attempts have been made for each target cell or target beam; a reason for rejection in a case where the access fails; and the process time taken by the UE to successfully access a certain target cell or target beam (starting from the moment when the UE acquires a CHO preconfiguration related to the target cell).

By means of the present embodiment, by setting different RACH access procedure information, the requirements of a source base station for different information can be satisfied, thereby improving the flexibility of configuration of the RACH access procedure information.

In addition to the RACH access procedure information, the UE may also record other information related to the CHO handover.

In an exemplary embodiment, in the process that the UE executes the local condition evaluation for the CHO and executes the CHO, the method may further include at least one of the following operations: recording first Radio Resource Management (RRM) measurement result information of the source cell or a source beam of the UE; and recording second RRM measurement result information of the candidate target cell or the candidate target beam of the UE.

For example, during a local condition evaluation and execution process of a CHO handover, UE traces and records RACH access procedure information about each RACH access attempt to a certain potential/candidate target cell, and RRM measurement result information of a current source serving cell and a current target serving cell.

By means of the present embodiment, by recording the RRM measurement result information of a source cell (or a source beam) and a target cell (or a target beam), the recorded CHO handover related information can be extended, thereby improving the capability of a source base station for acquiring a comprehensive wireless environment condition of a neighbor cell.

In an exemplary embodiment, the first RRM measurement result information is latest or most recent RRM measurement result information acquired by the UE by performing measurement on the source cell or the source beam, and the first RRM measurement result information is based on an SSB signal or a CSI-RS. The second RRM measurement result information is latest or most recent RRM measurement result information acquired by the UE by performing measurement on the candidate target cell or the candidate target beam, and the second RRM measurement result information is based on an SSB signal or a CSI-RS.

For example, the RRM measurement result information (the first RRM measurement result information or the second RRM measurement result information) is the latest or most recent RRM measurement result information measured and stored by the UE for the source cell (or the source beam) or the target cell (or the target beam), and the RRM measurement result information may be based on an SSB signal or a CSI-RS signal.

According to this embodiment, validity of the acquired RRM measurement result information can be ensured by acquiring the latest or most recent RRM measurement result information.

In the above operation S604, the RACH access procedure information is finally sent to the source cell or source base station node of the UE.

With regard to the RACH access procedure information recorded by the UE, the RACH access procedure information can be sent to a source cell or source base station node of the UE, so that the source cell or the source base station to which a source beam belongs can know the comprehensive condition of a plurality of neighbor cells serving as CHO candidate cells.

There may be a plurality of manners for sending the RACH access procedure information to the source cell or source base station node of the UE. For example, the RACH access procedure information may be sent to the source cell or source base station node by the target cell or target base station node, or the RACH access procedure information may be sent to the source cell or source base station node by the UE.

As an exemplary embodiment, in a case where the UE successfully accesses the at least one candidate target cell or the at least one candidate target beam, the operation that the RACH access procedure information is finally sent to the source cell or source base station node of the UE includes: the RACH access procedure information is reported to a target cell or target base station node through a first Radio Resource Control (RRC) uplink message, so that the RACH access procedure information is sent to the source cell or source base station node of the UE through the target cell or target base station node via an inter-base station interface.

In a case where the UE successfully accesses the target cell or target beam, the target cell or target base station node may send the RACH access procedure information to the target cell or target base station node. For example, the UE sends the RACH access procedure information to the target cell or target base station node, and then the target cell or target base station node sends the RACH access procedure information to the source cell or source base station node via an inter-base station interface.

In at least one exemplary embodiment, after the UE determines that a certain candidate target cell or candidate target beam satisfies an actual handover condition, before the connection between the UE and the source cell or source base station node is released, the UE sends the RACH access procedure information to the source cell or source base station node.

By means of the present embodiment, in a case where UE is successfully handed over to a target cell or target beam, the target cell or target base station node sends the RACH access procedure information to the source cell or source base station node, so that the success rate of sending the RACH access procedure information can be guaranteed.

As another exemplary embodiment, in a case where the UE fails to successfully access any one of the at least one candidate target cell or the at least one candidate target beam, the operation that the RACH access procedure information is finally sent to the source cell or source base station node of the UE includes: the RACH access procedure information is reported to the source cell or source base station node through a second RRC uplink message.

In a case where the UE fails to successfully access any candidate target cell or candidate target beam, the UE may send the RACH access procedure information to the source cell or source base station node.

In at least one exemplary embodiment, the UE may report, through an RRC uplink message, the RACH access procedure information to the source cell or source base station node, or to the target cell or target base station node.

By means of the present embodiment, in a case where the UE is not successfully handed over to the target cell or target beam, the UE sends the RACH access procedure information to the source cell or source base station node, so that the success rate of sending the RACH access procedure information can be guaranteed.

In an exemplary embodiment, the RRC uplink message (the first RRC uplink message or the second RRC uplink message) may be one of: a CHO handover completion message of the UE, or a UE specific flow message after handover completion of the CHO.

For example, after successfully accessing a certain target cell or target beam, the UE reports the above recorded RACH access procedure information to the target base station/serving cell through an RRC uplink message. In a case where the UE fails to access a certain target cell or target beam eventually, the UE reports the above recorded RACH access procedure information to the source base station/serving cell through an RRC uplink message. The reported RRC uplink message may be a CHO handover completion message of the UE, for example, an RRC Reconfiguration Complete message, or a specific flow message after handover completion of the CHO.

By means of the present embodiment, the use of a CHO handover completion message or a UE specific flow message after handover completion of the CHO can be compatible with existing messages, thereby improving the compatibility of a system.

The embodiment also provides an information transmission method running on a source base station. Fig. 7 is a flowchart of another exemplary information transmission method according to some embodiments of the present invention. As shown in Fig. 7, the flow includes the following operation S702.

At S702, RACH access procedure information sent by UE or a target cell or target base station node of the UE is received, wherein the RACH access procedure information is procedure information, measured and recorded by the UE in a process that the UE executes local condition evaluation for CHO and executes the CHO, about the UE executing RACH access to at least one candidate target cell or at least one candidate target beam.

By means of the operation, the source base station receives the RACH access procedure information sent by the UE or the target cell or target base station node of the UE, so that the source base station can not only learn what the UE has experienced in the process of executing the CHO, but can also learn a comprehensive wireless environment condition of neighbor cells, so as to optimize CHO configuration (resource reservation, parameter setting, etc.) of other UEs under the source base station, and therefore the problem of network resource waste and system performance degradation caused by inappropriate resource preconfiguration and parameter setting provided by a source base station for a CHO handover procedure of UE in the related art can be solved, thereby achieving the effects of avoiding network resource allocation and reservation waste, improving system performance and improving CHO operation efficiency of UE.

In at least one exemplary embodiment, the entity for executing the foregoing operation may be, but is not limited to, a source base station.

Before the operation S702, the source cell or source base station node of the UE may send a conditional handover command to the UE, wherein the conditional handover command carries CHO configuration information, the CHO configuration information includes the at least one candidate target cell or the at least one candidate target beam, and the conditional handover command is used for instructing the UE to execute the CHO according to the CHO configuration information.

The source cell (the cell of the source base station) may send a CHO command (handover preparation) to the UE, wherein the CHO command may include candidate cell information (including at least one candidate target cell or at least one candidate target beam), and may further include an RRM measurement result of each candidate target cell or each candidate target beam.

By means of the present embodiment, a conditional handover command carrying at least one candidate target cell or at least one candidate target beam is sent to the UE, so as to control the UE to prepare for conditional handover, thereby improving the efficiency of the conditional handover of the UE.

In an exemplary embodiment, before receiving the RACH access procedure information sent by the UE or the target cell or target base station node of the UE, the source cell or source base station node may send a first interface signalling flow message to the target cell or target base station node of the UE, wherein the first interface signalling flow message is used for requesting the target cell or target base station node of the UE to send the RACH access procedure information measured and recorded by the UE in the process that the UE executes the local condition evaluation for the CHO and executes the CHO.

The source base station may send an indication for requesting the RACH access procedure information to the target base station through an interface signalling flow message between the base stations, and the indication for requesting the RACH access procedure information may be related to a single UE or related to a plurality of UEs at the same time.

The source base station may preconfigure an authorization to the target base station through an interface signalling flow message between the base stations, so as to indicate whether the target base station is authorized to actively push the RACH access procedure information of the UE to the source base station after the UE successfully accesses the target base station and reports the RACH access procedure information subsequently.

The source base station may also not preconfigure an authorization to the target base station, and after the UE successfully accesses the target base station and reports the RACH access procedure information subsequently, the target base station itself decides whether and when to actively push the RACH access procedure information of a single UE or of multiple UEs to the source base station.

By means of the present embodiment, the source base station requests the RACH access procedure information through an interface signalling flow message, thereby improving the pertinence of sending the RACH access procedure information, and avoiding wasting communication resources.

In an exemplary embodiment, after sending the first interface signalling flow message to the target cell or target beam, a second interface signalling flow message sent by the target cell or target base station node may be received, wherein the second interface signalling flow message carries the RACH access procedure information, or the second interface signalling flow message carries indication information for indicating a failure in and a failure reason for acquiring the RACH access procedure information.

In a case where the requested target base station has acquired the RACH access procedure information of UE(s), the RACH access procedure information may be fed back to the source base station through an interface signalling flow message between the base stations. In a case where the requested target base station does not acquire the RACH access procedure information for UE(s), a failure and a reason value indication may be fed back.

By means of the present embodiment, feedback of the RACH access procedure information or the failure of acquiring the RACH access procedure information is performed through an interface signalling flow message, so that the source base station can monitor the CHO process of the UE, thereby improving the effectiveness of information transmission.

The UE and the target base station can timely send the RACH access procedure information recorded in the CHO process, the RRM measurement information and the performance indicator related to the CHO handover to the source base station, which enables an expansion and utilization of the currently introduced Handover Success message flow, so that the source base station can quickly sense the CHO execution situation of the UE at the first time.

By means of the received RACH access procedure information, the source base station can not only learn what the UE has experienced in the process of executing the CHO, but can also learn a comprehensive wireless environment condition of neighbor cells, so as to optimize CHO configuration (resource reservation, parameter setting, etc.) of other UEs under the source base station.

After receiving the RACH access procedure information, the source base station can perform CHO configuration for other UEs under the source base station according to the RACH access procedure information. The CHO configuration may include, but is not limited to, at least one of the following: resource reservation and parameter setting.

When performing the CHO configuration, the source base station can reduce prohibitive and redundant preconfiguration of target side resources of a network as far as possible, accurately set priorities of different potential/candidate target base stations/serving cells, and reduce CHO handover determination time delay of UE and improve handover robustness, etc., so that under the operation of a conditional handover across different base stations, the configuration of resources and parameters related to the conditional handover can be improved.

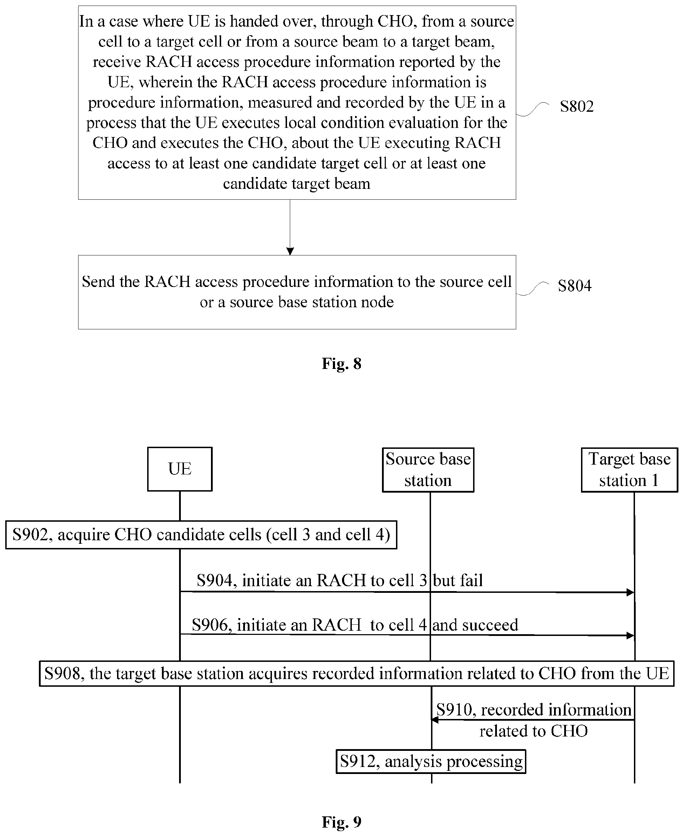

The embodiment also provides an information transmission method running on a target base station. Fig. 8 is a flowchart of still another exemplary information transmission method according to some embodiments of the present invention. As shown in Fig. 8, the method includes the following operations S802 and S804.

At S802, in a case where UE is handed over, through CHO, from a source cell to a target cell or from a source beam to a target beam, RACH access procedure information reported by the UE is received, wherein the RACH access procedure information is procedure information, measured and recorded by the UE in a process that the UE executes local condition evaluation for the CHO and executes the CHO, about the UE executing RACH access to at least one candidate target cell or at least one candidate target beam.

At S804, the RACH access procedure information is sent to the source cell or a source base station node.

By means of the operations, the target cell or target base station node sends the RACH access procedure information reported by the UE to the source cell or source base station node, so that the source base station can not only learn what the UE has experienced in the process of executing the CHO, but can also learn a comprehensive wireless environment condition of neighbor cells, so as to optimize CHO configuration (resource reservation, parameter setting, etc.) of other UEs under the source base station, and therefore the problem of network resource waste and system performance degradation caused by inappropriate resource preconfiguration and parameter setting provided by a source base station for a CHO handover procedure of UE in the related art can be solved, thereby achieving the effects of avoiding network resource allocation and reservation waste, improving system performance and improving CHO operation efficiency of UE.

In at least one exemplary embodiment, the entity for executing the foregoing operations may be, but is not limited to, a target base station.

In an exemplary embodiment, before the operation S804, the target cell or target base station node may receive authorization information configured by the source cell or source base station node, wherein the authorization information is used for indicating that the target cell or target base station node is authorized to actively push the RACH access procedure information to the source cell or source base station node.

The source base station may preconfigure an authorization to the target base station through an interface signalling flow message between the base stations, so as to indicate whether the target base station is authorized to actively push the RACH access procedure information of the UE to the source base station after the UE successfully accesses the target base station and reports the RACH access procedure information subsequently.

The source base station may also not preconfigure an authorization to the target base station, and after the UE successfully accesses the target base station and reports the RACH access procedure information subsequently, the target base station itself decides whether and when to actively push the RACH access procedure information of a single UE or of multiple UEs to the source base station.

By means of the embodiment, the source base station preconfigures an authorization to the target base station, so as to instruct the target cell to actively push the RACH access procedure information, thereby improving the sending efficiency of the RACH access procedure information, and avoiding wasting communication resources.

In an exemplary embodiment, the operation that the RACH access procedure information is sent to the source cell or source base station node may include: the RACH access procedure information is sent to the source cell or source base station node through a handover success flow message or other interface signalling flow message between base stations except the handover success flow message.

The pushing process of the RACH access procedure information can reuse an existing Handover Success flow message, and the RACH access procedure information may be carried in the Handover Success message. The push flow may also be implemented through a new interface signalling flow message between base stations, for example, a newly defined UE CHO INFORMATION INDICATION may be used to carry the RACH access procedure information.

According to this embodiment, the RACH access procedure information is carried through an interface signaling flow message between base stations, thus ensuring a high success sending ratio of the RACH access procedure information.

In an exemplary embodiment, the operation that the RACH access procedure information reported by the UE is received may include: the RACH access procedure information reported by the UE is received through a first RRC uplink message.

The RACH access procedure information may be reported through an RRC uplink message, and the reported RRC uplink message may be a CHO handover completion message of the UE, such as an RRC Reconfiguration Complete message, and may also be a specific flow message after handover completion of the CHO.

By means of the embodiment, the use of a CHO handover completion message or a UE specific flow message after handover completion of the CHO can be compatible with existing messages, thereby improving the compatibility of a system.

The foregoing information transmission method is described below with reference to examples.

### Example 1

As shown in Figs. 3 and 9, certain UE is performing a CHO operation, and CHO related resources have been preconfigured in a certain target base station for the UE. The information transmission method in this example may include the following operations S902 to S912.

At S902, the UE acquires CHO candidate cells.

The UE acquires information of the candidate cells (cell 3 and cell 4 of the target base station 1) included in a CHO command (handover preparation) received from a source cell (cell 1 of the source base station). Based on RRM measurement results of related cells (e.g., cell 1, cell 3 and cell 4), the UE attempts to be handed over to a target cell, e.g., cell 3.

At S904, the UE initiates an RACH to cell 3 but fails.

The UE initiates a RACH procedure to cell 3, but eventually fails. The UE measures and records related information about the failed RACH procedure. The recorded information includes, for example, a reason for initiating the RACH (CHO) and at least one of: a cell ID of a cell to which the UE initiates the RACH, a beam ID or a beam ID list of a beam or beams to which the UE initiates the RACH, the type of each beam (an SSB or a CSI-RS), the number of times a preamble is sent on each beam, time information, and a failure reason.

The above time information may include at least one of: the time when the UE receives the CHO command containing the cell to which the RACH is initiated, the time when the UE sends the first preamble, the time when the RACH fails, the duration from the time when the UE receives the CHO command containing the cell to which the RACH is initiated to the time when the RACH initiated by the UE to the cell fails, the duration from the time when the UE receives the CHO command containing the cell to which the RACH is initiated to the time when the UE sends the first preamble in the cell, and the duration from the time when the UE sends the first preamble in a candidate cell to the time when the RACH initiated by the UE to the cell fails.

At S906, the UE initiates an RACH to cell 4 and succeeds.

The UE initiates a RACH procedure to a new target cell, e.g., cell 4 and successfully accesses cell 4. The UE notifies, through an RRC uplink message (for example, an RRC Reconfiguration Complete), the target base station 1 that recorded information related to CHO is available, that is, the RRC uplink message carries an indication indicating that recorded information related to CHO is available.

At S908, the target base station 1 acquires the recorded information related to the CHO from the UE.

The target base station 1 acquires the recorded information related to the CHO (e.g., through UE INFORMATION REQUEST or UE INFORMATION RESPONSE message) from the UE.

At S910, the target base station 1 sends the recorded information related to the CHO to the source base station.

The target base station 1 sends the recorded information related to the CHO to the source base station (for example, through a Handover Success message or other newly defined messages), wherein the recorded information related to the CHO includes the procedure information about the RACH failure of the UE in cell 3.

At S912, the source base station performs analysis and processing according to the received recorded information related to the CHO.

### Example 2

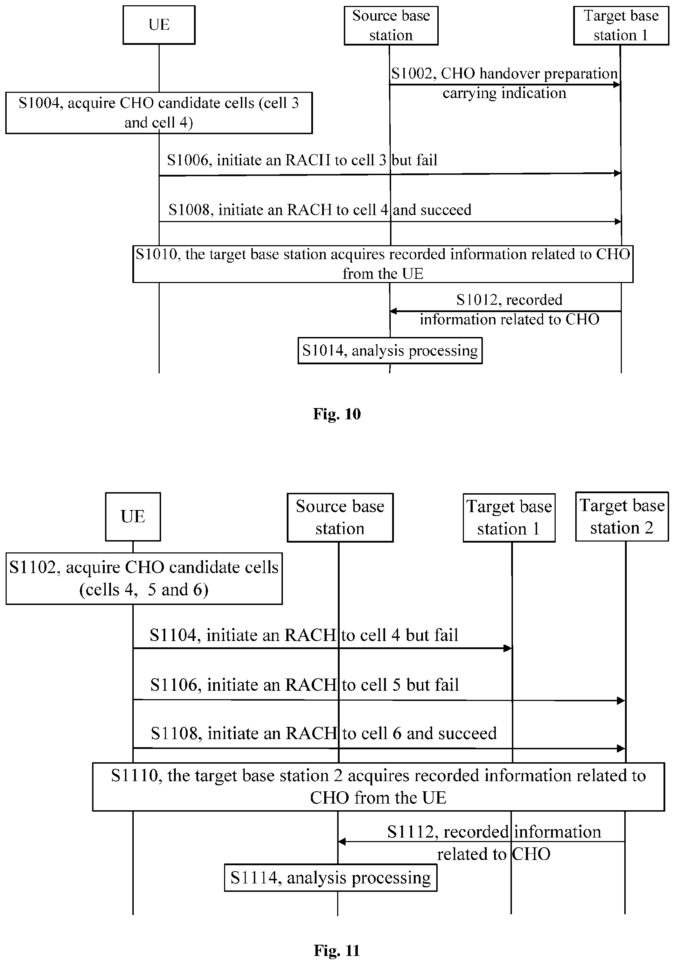

As shown in Figs. 3 and 10, certain UE is performing a CHO operation, and CHO related resources have been preconfigured in a certain target base station for the UE. The information transmission method in this example may include the following operations S1002 to S 1012.

At S 1002, a source base station sends a handover preparation message to a target base station 1, wherein the handover preparation message carries an indication of acquiring recorded information related to the CHO procedure.

The source base station sends a handover preparation message or a specific CHO handover preparation message to the target base station 1 to reserve CHO related resources for the UE in local cell 3 and cell 4 of the target base station 1, and carries an indication of acquiring recorded information related to the CHO procedure in the handover preparation message.

At S 1004, the UE acquires CHO candidate cells.

The UE acquires information of the candidate cells (cell 3 and cell 4 of the target base station 1) included in a CHO command (handover preparation) received from a source cell (cell 1 of the source base station). Based on RRM measurement results of related cells (e.g., cell 1, cell 3 and cell 4), the UE attempts to be handed over to a target cell, e.g., cell 3.

At S 1006, the UE initiates an RACH to cell 3 but fails.

The UE initiates a RACH procedure to cell 3, but eventually fails. The UE records related information of the failed RACH procedure, wherein the recorded information includes the same content as described in the operation S904 in Example 1.

At S 1008, the UE initiates an RACH to cell 4 and succeeds.

The UE initiates a RACH procedure to a new target cell, e.g., cell 4 and successfully accesses cell 4. The UE notifies, through an RRC uplink message (for example, an RRC Reconfiguration Complete), the target base station 1 that recorded information related to CHO is available, that is, the RRC uplink message carries an indication indicating that recorded information related to CHO is available.

At S1010, the target base station 1 acquires the recorded information related to the CHO from the UE.

The target base station 1 acquires the recorded information related to the CHO (e.g., through UE INFORMATION REQUEST or UE INFORMATION RESPONSE message) from the UE.

At S 1012, the target base station 1 sends the recorded information related to the CHO to the source base station.

The target base station 1 sends the recorded information related to the CHO procedure to the source base station (for example, through a Handover Success message or other newly defined messages) according to the indication of acquiring the recorded information related to the CHO procedure previously received from the source base station. The recorded information related to the CHO includes information related to RACH failure of the UE in cell 3, and may further include information related to RACH success of the UE in cell 4.

At S1014, the source base station performs analysis and processing according to the received recorded information related to the CHO.

### Example 3

As shown in Figs. 3 and 11, certain UE is performing a CHO operation, and CHO related resources have been preconfigured in some target base stations for the UE. The information transmission method in this example may include the following operations S1102 to S1114.

At S1102, the UE acquires CHO candidate cells.

The UE acquires information of the candidate cells (cell 4 of the target base station 1, and cell 5 and cell 6 of the target base station 2) included in the CHO command (handover preparation) received from a source cell (cell 1 of the source base station). The UE attempts to be handed over to a target cell, e.g., cell 4, based on RRM measurement results of related cells (e.g., cell 1, cell 4, cell 5 and cell 6).

At S1104, the UE initiates an RACH to cell 4 but fails.

The UE initiates a RACH procedure to the target cell 4, but finally fails. The UE records related information of the failed RACH procedure, wherein the recorded information includes the content described in the operation S904 in Example 1.

At S1106, the UE initiates an RACH to cell 5 but fails.

The UE initiates a RACH procedure to cell 5, but also eventually fails. The UE records related information of the failed RACH procedure, wherein the recorded information includes the content described in the operation S904 in Example 1.

At S1108, the UE initiates an RACH to cell 6 and succeeds.

The UE initiates a RACH procedure to cell 6 and successfully accesses cell 6. The UE notifies, through an RRC uplink message (for example, an RRC Reconfiguration Complete), the target base station 2 that recorded information related to CHO is available, that is, the RRC uplink message carries an indication indicating that recorded information related to CHO is available.

At S 1110, the target base station 2 acquires the recorded information related to the CHO from the UE.

The target base station 2 acquires the recorded information related to the CHO from the UE (e.g., through UE INFORMATION REQUEST, or UE INFORMATION RESPONSE message).

At S1112, the target base station 2 sends the recorded information related to the CHO to the source base station.

The target base station 2 sends the recorded information related to the CHO to the source base station (for example, through a Handover Success message or other newly defined messages). The recorded information related to the CHO includes information related to RACH failure of the UE in cell 4 and cell 5, and may further include information related to RACH success of the UE in cell 6.

At S1114, the source base station performs analysis processing according to the received recorded information related to the CHO.

### Example 4

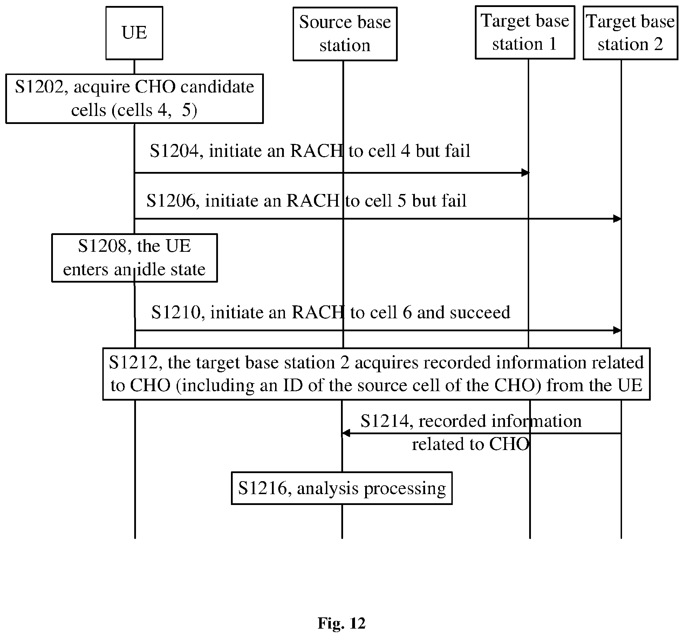

As shown in Figs. 3 and 12, certain UE is performing a CHO operation, and CHO related resources have been preconfigured in some target base stations for the UE. The information transmission method in this example may include the following operations S1202 to S1216.

At S 1202, UE acquires CHO candidate cells.

The UE acquires information of the candidate cells (cell 4 of the target base station 1 and cell 5 of the target base station 2) included in the CHO command (handover preparation) received from a source cell (cell 1 of the source base station). The UE attempts to be handed over to a target cell, e.g., cell 4 based on RRM measurement results of the related cells (e.g., cell 1, cell 4 and cell 5).

At S 1204, the UE initiates an RACH to cell 4 but fails.

The UE initiates a RACH procedure to the target cell 4, but finally fails. The UE records related information of the failed RACH procedure, wherein the recorded information includes the content described in the operation S904 in Example 1. The UE records the ID of the source cell of the CHO and the RRM measurement result.

At S 1206, the UE initiates an RACH to cell 5 but fails.

The UE initiates a RACH procedure to cell 5, but also eventually fails. The UE records related information of the failed RACH procedure, wherein the recorded information includes the content described in the operation S904 in Example 1.

At S1208, the UE enters an idle state.

At S1210, the UE initiates an RACH to cell 6 and succeeds.

The UE initiates a RACH procedure to cell 6 and successfully accesses cell 6. The UE notifies, through an RRC uplink message (for example, an RRC Reconfiguration Complete), the target base station 2 that recorded information related to CHO is available, that is, the RRC uplink message carries an indication indicating that recorded information related to CHO is available.

At S1212, the target base station 2 acquires the recorded information related to the CHO from the UE.

The target base station 2 acquires the recorded information related to the CHO from the UE (e.g., through UE INFORMATION REQUEST, or UE INFORMATION RESPONSE message).

At S1214, the target base station 2 sends the recorded information related to the CHO to the source base station.

The target base station 2 sends, according to the ID of the source cell of the CHO in the recorded information related to the CHO procedure acquired from the UE (the address of the source base station of the CHO can be known through the ID of the source cell of the CHO), the recorded information related to the CHO procedure to the source base station (for example, through a newly defined message). The recorded information includes information about RACH failure of the UE in cell 4 and cell 5, and also includes related procedure information about RACH success of the UE in cell 6.

At S1216, the source base station performs analysis processing according to the received recorded information related to the CHO.

### Example 5

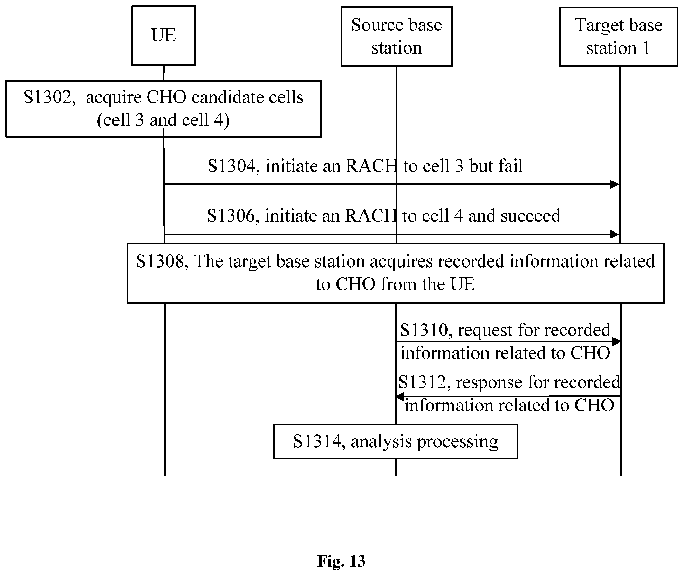

As shown in Figs. 3 and 13, certain UE is performing a CHO operation, and CHO related resources have been preconfigured in a certain target base station for the UE. The information transmission method in this example may include the following operations S1302 to S1314.

At S1302, the UE acquires CHO candidate cells.

The UE acquires information of the candidate cells (cell 3 and cell 4 of the target base station 1) included in a CHO command (handover preparation) received from a source cell (cell 1 of the source base station). Based on RRM measurement results of related cells (e.g., cell 1, cell 3 and cell 4), the UE attempts to be handed over to a target cell, e.g., cell 3.

At S1304, the UE initiates an RACH to cell 3 but fails.

The UE initiates a RACH procedure to cell 3, but eventually fails. The UE records related information of the failed RACH procedure, wherein the recorded information includes the content described in the operation S904 in Example 1.

At 1306, the UE initiates an RACH to cell 4 and succeeds.

The UE initiates a RACH procedure to a new target cell, e.g., cell 4 and successfully accesses cell 4. The UE notifies, through an RRC uplink message (for example, an RRC Reconfiguration Complete), the target base station 1 that recorded information related to CHO is available, that is, the RRC uplink message carries an indication indicating that recorded information related to CHO is available.

At S1308, the target base station 1 acquires the recorded information related to the CHO from the UE.

The target base station 1 acquires the recorded information related to the CHO (e.g., through UE INFORMATION REQUEST, or UE INFORMATION RESPONSE message) from the UE.

At S1310, the source base station sends a request message for the recorded information related to the CHO to the target base station 1.

The source base station sends a request message for the recorded information related to the CHO to the target base station 1 (e.g., through a newly defined flow message XnAP: UE INFORMATION REQUEST).

At S1312, the target base station 1 sends the recorded information related to the CHO to the source base station.

The target base station 1 may send a response message for the recorded information related to the CHO to the source base station according to the request message for the recorded information related to the CHO (for example, through a newly defined flow message XnAP: UE INFORMATION RESPONSE), wherein the response message for the recorded information related to the CHO carries the recorded information related to the CHO, and the recorded information includes: procedure information about RACH failure of the UE in cell 3, and also includes procedure information related to RACH success of the UE in cell 4.

At S1314, the source base station performs analysis and processing according to the received recorded information related to the CHO.

### Example 6

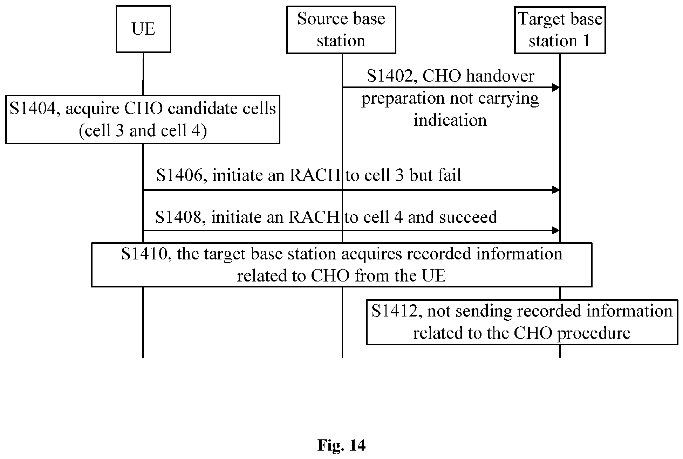

As shown in Figs. 3 and 14, certain UE is performing a CHO operation, and CHO related resources have been preconfigured in a certain target base station for the UE. The information transmission method in this example may include the following operations S1402 to S1412.

At S1402, the source base station sends a handover preparation message or a specific CHO handover preparation message to the target base station 1, reserves CHO related resources for the UE in local cell 3 and cell 4 of the target base station 1, and does not carry an instruction for acquiring recorded information related to a CHO procedure in the handover preparation message.

At S1404, the UE acquires CHO candidate cells.

The UE acquires information of the candidate cells (cell 3 and cell 4 of the target base station 1) included in a CHO command (handover preparation) received from a source cell (cell 1 of the source base station). Based on RRM measurement results of related cells (e.g., cell 1, cell 3 and cell 4), the UE attempts to be handed over to a target cell, e.g., cell 3.

At S1406, the UE initiates an RACH to cell 3 but fails.

The UE initiates a RACH procedure to cell 3, but eventually fails. The UE records related information of the failed RACH procedure, wherein the recorded information includes the content described in the operation S904 in Example 1.

At S1408, the UE initiates an RACH to cell 4 and succeeds.

The UE initiates a RACH procedure to a new target cell, e.g., cell 4 and successfully accesses cell 4. The UE notifies, through an RRC uplink message (for example, an RRC Reconfiguration Complete), the target base station 1 that recorded information related to CHO is available, that is, the RRC uplink message carries an indication indicating that recorded information related to CHO is available.

At S1410, the target base station 1 acquires the recorded information related to the CHO from the UE.

The target base station 1 acquires the recorded information related to the CHO from the UE (e.g., through UE INFORMATION REQUEST, or UE INFORMATION RESPONSE message).

At S1412, the target base station 1 does not send the recorded information related to the CHO procedure.

Since the indication of acquiring the recorded information related to the CHO procedure has not been received from the source base station, the target base station 1 decides not to send the recorded information related to the CHO procedure to the source base station.

Through the description of the above implementations, those having ordinary skill in the art can understand that the method according to the above embodiment may be implemented by means of software plus a necessary general hardware platform, and of course, may also be implemented through hardware. The technical solution of the embodiments of the present invention may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present invention.

The present embodiment also provides an information transmission apparatus. The apparatus is used to implement the above embodiments and exemplary implementations, and the details having been described will not be repeated. As used below, the term "module" may implement a combination of software and/or hardware of a predetermined function. Although the apparatus described in the following embodiments is preferably implemented in software, the implementation in hardware or a combination of software and hardware is also possible and contemplated.

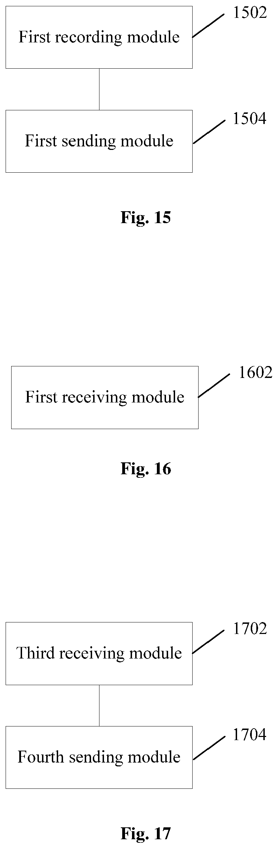

Fig. 15 is a structural block diagram of an exemplary information transmission apparatus according to some embodiments of the present invention. As shown in Fig. 15, the apparatus includes:
(1) a first recording module 1502 configured to measure and record, in a process that UE executes local condition evaluation for CHO and executes the CHO, RACH access procedure information about the UE executing RACH access to at least one candidate target cell or at least one candidate target beam; and
(2) a first sending module 1504 connected to the first recording module 1502 and configured to send the RACH access procedure information to a source cell or source base station node of the UE.

In an exemplary embodiment, the first sending module 1504 may include:
(1) a first reporting unit configured to, in a case where the UE successfully accesses the at least one candidate target cell or the at least one candidate target beam, report the RACH access procedure information to a target cell or target base station node through a first Radio Resource Control (RRC) uplink message, so as to send the RACH access procedure information to the source cell or source base station node of the UE through the target cell or target base station node via an inter-base station interface; or,
(2) a second reporting unit configured to, in a case where the UE fails to successfully access any one of the at least one candidate target cell or the at least one candidate target beam, report the RACH access procedure information to the source cell or source base station node through a second RRC uplink message.

In an exemplary embodiment, the first RRC uplink message may be one of a CHO handover completion message of the UE, or a UE specific flow message after handover completion of the CHO.

In an exemplary embodiment, the second RRC uplink message may be one of a CHO handover completion message of the UE, or a UE specific flow message after handover completion of the CHO.

In an exemplary embodiment, the apparatus may further include at least one of:
(1) a second recording module configured to record first RRM measurement result information of the source cell or a source beam of the UE in the process that the UE executes the local condition evaluation for the CHO and executes the CHO; and
(2) a third recording module configured to record second RRM measurement result information of the candidate target cell or the candidate target beam of the UE in the process that the UE executes the local condition evaluation for the CHO and executes the CHO.

In an exemplary embodiment, the first RRM measurement result information is latest or most recent RRM measurement result information acquired by the UE by performing measurement on the source cell or the source beam, and the first RRM measurement result information is based on a SSB signal or a CSI-RS.

In an exemplary embodiment, the second RRM measurement result information is latest or most recent RRM measurement result information acquired by the UE by performing measurement on the candidate target cell or the candidate target beam, and the second RRM measurement result information is based on an SSB signal or a CSI-RS.

Fig. 16 is a structural block diagram of another exemplary information transmission apparatus according to some embodiments of the present invention. As shown in Fig. 16, the apparatus includes:
(1) a first receiving module 1602, configured to receive RACH access procedure information sent by UE or a target cell or target base station node of the UE, wherein the RACH access procedure information is procedure information, measured and recorded by the UE in a process that the UE executes local condition evaluation for CHO and executes the CHO, about the UE executing RACH access to at least one candidate target cell or at least one candidate target beam.

In an exemplary embodiment, the apparatus may further include:
(1) a second sending module configured to send, before receiving the RACH access procedure information sent by the UE or the target cell or target base station node of the UE, a first interface signalling flow message to the target cell or target base station node of the UE, wherein the first interface signalling flow message is used for requesting the target cell or target base station node of the UE to send the RACH access procedure information measured and recorded by the UE in the process that the UE executes the local condition evaluation for the CHO and executes the CHO.

In an exemplary embodiment, the apparatus may further include:
(1) a second receiving module configured to receive, after sending the first interface signalling flow message to the target cell or target base station node of the UE, a second interface signalling flow message sent by the target cell or target base station node, wherein the second interface signalling flow message carries the RACH access procedure information, or the second interface signalling flow message carries indication information for indicating a failure in and a failure reason for acquiring the RACH access procedure information.

In an exemplary embodiment, the apparatus may further include:
(1) a third sending module configured to send, before receiving the RACH access procedure information sent by the UE or the target cell or target base station node of the UE, a conditional handover command to the UE, wherein the conditional handover command carries CHO configuration information, the CHO configuration information includes information of the at least one candidate target cell or the at least one candidate target beam, and the conditional handover command is used for instructing the UE to execute the CHO according to the CHO configuration information.

Fig. 17 is a structural block diagram of still another exemplary information transmission apparatus according to some embodiments of the present invention. As shown in Fig. 17, the apparatus includes:
(1) a third receiving module 1702 configured to, in a case where UE is handed over, through CHO, from a source cell to a target cell or from a source beam to a target beam, receive RACH access procedure information reported by the UE, wherein the RACH access procedure information is procedure information, measured and recorded by the UE in a process that the UE executes local condition evaluation for the CHO and executes the CHO, about the UE executing RACH access to at least one candidate target cell or at least one candidate target beam; and
(2) a fourth sending module 1704 connected to the third receiving module 1702 and configured to send the RACH access procedure information to the source cell or a source base station node.

In an exemplary embodiment, the apparatus may further include:
(1) a fourth receiving module configured to receive, before sending the RACH access procedure information to the source cell or the source base station node, authorization information configured by the source cell or source base station node, wherein the authorization information is used for indicating that the target cell or target base station node is authorized to actively push the RACH access procedure information to the source cell or source base station node.

In an exemplary embodiment, the fourth sending module 1704 may include:
(1) a sending unit configured to send the RACH access procedure information to the source cell or source base station node through a handover success flow message or other interface signalling flow message between base stations except the handover success flow message.

In an exemplary embodiment, the third receiving module may include:
(1) a receiving unit configured to receive the RACH access procedure information reported by the UE through a first RRC uplink message.

It is to be noted that each of the above modules may be implemented by software or hardware. For the latter, the modules may be implemented by, but not limited to, either of the following manners: the above modules are all located in the same processor; or, the above modules are located in different processors in any combination form respectively.

The embodiment of the present invention also provides a storage medium. The storage medium stores a computer program, and the computer program is configured to execute the operations in any one of the method embodiments at runtime.

In at least one exemplary embodiment, the storage medium is configured to store a computer program for executing the operations of:
S1, in a process that UE executes local condition evaluation for CHO and executes the CHO, measuring and recording RACH access procedure information about the UE executing RACH access to at least one candidate target cell or at least one candidate target beam; and
S2, sending the RACH access procedure information to a source cell or source base station node of the UE.

In at least one exemplary embodiment, the storage medium is configured to store a computer program for executing the operation of:
S1, receiving RACH access procedure information sent by UE or a target cell or target base station node of the UE, wherein the RACH access procedure information is procedure information, measured and recorded by the UE in a process that the UE executes local condition evaluation for CHO and executes the CHO, about the UE executing RACH access to at least one candidate target cell or at least one candidate target beam.

In at least one exemplary embodiment, the storage medium is configured to store a computer program for executing the operations of:
S 1, in a case where UE is handed over, through CHO, from a source cell to a target cell or from a source beam to a target beam, receiving RACH access procedure information reported by the UE, wherein the RACH access procedure information is procedure information, measured and recorded by the UE in a process that the UE executes local condition evaluation for the CHO and executes the CHO, about the UE executing RACH access to at least one candidate target cell or at least one candidate target beam; and
S2, sending the RACH access procedure information to the source cell or a source base station node.

In at least one exemplary embodiment, the storage medium may include, but is not limited to, any medium that can store a computer program, such as a USB flash disk, a ROM (Read-Only Memory), a RAM (Random Access Memory), a mobile hard disk, a magnetic disk, or an optical disk.

The embodiment of the present invention also provides an electronic apparatus, including a memory and a processor, wherein the memory stores a computer program, and the processor is configured to run the computer program so as to execute the operations in any of the method embodiments.

In at least one exemplary embodiment, the electronic apparatus may further include a transmission device and an input/output device, wherein the transmission device is connected to the processor, and the input/output device is connected to the processor.

In at least one exemplary embodiment, the processor is configured to execute the following operations by means of a computer program:
S1, in a process that UE executes local condition evaluation for CHO and executes the CHO, measuring and recording RACH access procedure information about the UE executing RACH access to at least one candidate target cell or at least one candidate target beam; and
S2, sending the RACH access procedure information to a source cell or source base station node of the UE.

In at least one exemplary embodiment, the processor is configured to execute the following operations by means of a computer program:
S1, receiving RACH access procedure information sent by UE or a target cell or target base station node of the UE, wherein the RACH access procedure information is procedure information, measured and recorded by the UE in a process that the UE executes local condition evaluation for CHO and executes the CHO, about the UE executing RACH access to at least one candidate target cell or at least one candidate target beam.

In at least one exemplary embodiment, the processor is configured to execute the following operations by means of a computer program:
S1, in a case where UE is handed over, through CHO, from a source cell to a target cell or from a source beam to a target beam, receiving RACH access procedure information reported by the UE, wherein the RACH access procedure information is procedure information, measured and recorded by the UE in a process that the UE executes local condition evaluation for the CHO and executes the CHO, about the UE executing RACH access to at least one candidate target cell or at least one candidate target beam; and
S2, sending the RACH access procedure information to the source cell or a source base station node.

Optionally, specific implementations for the present embodiment may refer to the examples described in the above embodiments and alternative implementations, and details are not repeated in the present embodiment.

It is apparent that a person skilled in the art shall understand that all of the above-mentioned modules or operations in the present invention may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the embodiments of the present invention are not limited to any specific hardware and software combination.

## Claims

1. An information transmission method, comprising:
in a process that User Equipment, UE, executes local condition evaluation for Conditional Handover, CHO, and executes the CHO, measuring and recording Random Access Channel, RACH, access procedure information about the UE executing RACH access to at least one candidate target cell or at least one candidate target beam; and
sending the RACH access procedure information to a source cell or source base station node of the UE.

2. The method according to claim 1, wherein sending the RACH access procedure information to a source cell or source base station node of the UE comprises:
in a case where the UE successfully accesses the at least one candidate target cell or the at least one candidate target beam, reporting the RACH access procedure information to a target cell or target base station node through a first Radio Resource Control, RRC, uplink message, so as to send the RACH access procedure information to the source cell or source base station node of the UE through the target cell or target base station node via an inter-base station interface; or,
in a case where the UE fails to successfully access any one of the at least one candidate target cell or the at least one candidate target beam, reporting the RACH access procedure information to the source cell or source base station node through a second RRC uplink message.

3. The method according to claim 2, wherein
the first RRC uplink message is one of: a CHO handover completion message of the UE, or a UE specific flow message after handover completion of the CHO; or,
the second RRC uplink message is one of: a CHO handover completion message of the UE, or a UE specific flow message after handover completion of the CHO.

4. The method according to claim 1, wherein the RACH access procedure information comprises at least one of:
user position related information, candidate target cell identification information or candidate target beam identification information for indicating the at least one candidate target cell or the at least one candidate target beam;
information indicating whether the UE successfully completes the RACH access to one candidate target cell of the at least one candidate target cell or one candidate target beam of the at least one candidate target beam;
information indicating a number of times the UE attempts to perform the RACH access to the at least one candidate target cell or the at least one candidate target beam and a time stamp for execution of each RACH access;
information indicating a reason for rejection of an attempt of the UE to perform the RACH access to one candidate target cell of the at least one candidate target cell or one candidate target beam of the at least one candidate target beam; and
information indicating a process time taken for the UE to successfully perform the RACH access to one candidate target cell of the at least one candidate target cell or one candidate target beam of the at least one candidate target beam and information of user service transmission interruption time.

5. The method according to any one of claims 1 to 4, wherein in the process that the UE executes the local condition evaluation for the CHO and executes the CHO, the method further comprises at least one of the following:
recording first Radio Resource Management, RRM, measurement result information of the source cell or a source beam of the UE; and
recording second RRM measurement result information of the candidate target cell or the candidate target beam of the UE.

6. The method according to claim 5, wherein
the first RRM measurement result information is latest or most recent RRM measurement result information acquired by the UE by performing measurement on the source cell or the source beam, and the first RRM measurement result information is based on a Synchronization Signal Block, SSB, signal or a Channel State Information Reference Signal, CSI-RS; or,
the second RRM measurement result information is latest or most recent RRM measurement result information acquired by the UE by performing measurement on the candidate target cell or the candidate target beam, and the second RRM measurement result information is based on an SSB signal or a CSI-RS.

7. An information transmission method, comprising:
receiving Random Access Channel, RACH, access procedure information sent by User Equipment, UE, or a target cell or target base station node of the UE, wherein the RACH access procedure information is procedure information, measured and recorded by the UE in a process that the UE executes local condition evaluation for Conditional Handover, CHO, and executes the CHO, about the UE executing RACH access to at least one candidate target cell or at least one candidate target beam.

8. The method according to claim 7, wherein before receiving RACH access procedure information sent by UE or a target cell or target base station node of the UE, the method further comprises:
sending a first interface signalling flow message to the target cell or target base station node of the UE, wherein the first interface signalling flow message is used for requesting the target cell or target base station node of the UE to send the RACH access procedure information measured and recorded by the UE in the process that the UE executes the local condition evaluation for the CHO and executes the CHO.

9. The method according to claim 8, wherein after sending a first interface signalling flow message to the target cell or target base station node of the UE, the method further comprises:
receiving a second interface signalling flow message sent by the target cell or target base station node, wherein the second interface signalling flow message carries the RACH access procedure information, or the second interface signalling flow message carries indication information for indicating a failure in and a failure reason for acquiring the RACH access procedure information.

10. The method according to any one of claims 7 to 9, wherein before receiving RACH access procedure information sent by UE or a target cell or target base station node of the UE, the method further comprises:
sending a conditional handover command to the UE, wherein the conditional handover command carries CHO configuration information, the CHO configuration information comprises information of the at least one candidate target cell or the at least one candidate target beam, and the conditional handover command is used for instructing the UE to execute the CHO according to the CHO configuration information.

11. An information transmission method, comprising:
in a case where User Equipment, UE, is handed over, through Conditional Handover, CHO, from a source cell to a target cell or from a source beam to a target beam, receiving Random Access Channel, RACH, access procedure information reported by the UE, wherein the RACH access procedure information is procedure information, measured and recorded by the UE in a process that the UE executes local condition evaluation for the CHO and executes the CHO, about the UE executing RACH access to at least one candidate target cell or at least one candidate target beam; and
sending the RACH access procedure information to the source cell or a source base station node.

12. The method according to claim 11, wherein before sending the RACH access procedure information to the source cell or a source base station node, the method further comprises:
receiving authorization information configured by the source cell or source base station node, wherein the authorization information is used for indicating that the target cell or target base station node is authorized to actively push the RACH access procedure information to the source cell or source base station node.

13. The method according to claim 11, wherein sending the RACH access procedure information to the source cell or a source base station node comprises:
sending the RACH access procedure information to the source cell or source base station node through a handover success flow message or other interface signalling flow message between base stations except the handover success flow message.

14. The method according to any one of claims 11 to 13, wherein receiving RACH access procedure information reported by the UE comprises:
receiving the RACH access procedure information reported by the UE through a first Radio Resource Control, RRC, uplink message.

15. An information transmission apparatus, comprising:
a first recording module, configured to measure and record, in a process that User Equipment, UE, executes local condition evaluation for Conditional Handover, CHO, and executes the CHO, Random Access Channel, RACH, access procedure information about the UE executing RACH access to at least one candidate target cell or at least one candidate target beam; and
a first sending module, configured to send the RACH access procedure information to a source cell or source base station node of the UE.

16. The apparatus according to claim 15, wherein the first sending module comprises:
a first reporting unit, configured to report, in a case where the UE successfully accesses the at least one candidate target cell or the at least one candidate target beam, the RACH access procedure information to a target cell or target base station node through a first Radio Resource Control, RRC, uplink message, so as to send the RACH access procedure information to the source cell or source base station node of the UE through the target cell or target base station node via an inter-base station interface; or,
a second reporting unit, configured to report, in a case where the UE fails to successfully access any one of the at least one candidate target cell or the at least one candidate target beam, the RACH access procedure information to the source cell or source base station node through a second RRC uplink message.

17. The apparatus according to claim 15 or 16, further comprising at least one of:
a second recording module, configured to record first Radio Resource Management, RRM, measurement result information of the source cell or a source beam of the UE in the process that the UE executes the local condition evaluation for the CHO and executes the CHO; and
a third recording module, configured to record second RRM measurement result information of the candidate target cell or the candidate target beam of the UE in the process that the UE executes the local condition evaluation for the CHO and executes the CHO.

18. An information transmission apparatus, comprising:
a first receiving module, configured to receive Random Access Channel, RACH, access procedure information sent by User Equipment, UE, or a target cell or target base station node of the UE, wherein the RACH access procedure information is procedure information, measured and recorded by the UE in a process that the UE executes local condition evaluation for Conditional Handover, CHO, and executes the CHO, about the UE executing RACH access to at least one candidate target cell or at least one candidate target beam.

19. The apparatus according to claim 18, further comprising:
a second sending module, configured to send, before receiving the RACH access procedure information sent by the UE or the target cell or target base station node of the UE, a first interface signalling flow message to the target cell or target base station node of the UE, wherein the first interface signalling flow message is used for requesting the target cell or target base station node of the UE to send the RACH access procedure information measured and recorded by the UE in the process that the UE executes the local condition evaluation for the CHO and executes the CHO.

20. The apparatus according to claim 19, further comprising:
a second receiving module, configured to receive, after sending the first interface signalling flow message to the target cell or target base station node of the UE, a second interface signalling flow message sent by the target cell or target base station node, wherein the second interface signalling flow message carries the RACH access procedure information, or the second interface signalling flow message carries indication information used for indicating a failure in and a failure reason for acquiring the RACH access procedure information.

21. The apparatus according to any one of claims 18 to 20, further comprising:
a third sending module, configured to send, before receiving the RACH access procedure information sent by the UE or the target cell or target base station node of the UE, a conditional handover command to the UE, wherein the conditional handover command carries CHO configuration information, the CHO configuration information comprises the at least one candidate target cell or the at least one candidate target beam, and the conditional handover command is used for instructing the UE to execute the CHO according to the CHO configuration information.

22. An information transmission apparatus, comprising:
a third receiving module, configured to receive, in a case where User Equipment, UE, is handed over, through Conditional Handover, CHO, from a source cell to a target cell or from a source beam to a target beam, Random Access Channel, RACH, access procedure information reported by the UE, wherein the RACH access procedure information is procedure information, measured and recorded by the UE in a process that the UE executes local condition evaluation for the CHO and executes the CHO, about the UE executing RACH access to at least one candidate target cell or at least one candidate target beam; and
a fourth sending module, configured to send the RACH access procedure information to the source cell or a source base station node.

23. The apparatus according to claim 22, further comprising:
a fourth receiving module, configured to receive, before sending the RACH access procedure information to the source cell or source base station node, authorization information configured by the source cell or source base station node, wherein the authorization information is used for indicating that the target cell or target base station node is authorized to actively push the RACH access procedure information to the source cell or source base station node.

24. The apparatus according to claim 22, wherein the fourth sending module comprises:
a sending unit, configured to send the RACH access procedure information to the source cell or source base station node through a handover success flow message or other interface signalling flow message between base stations except the handover success flow message.

25. The apparatus according to any one of claims 22 to 24, wherein the third receiving module comprises:
a receiving unit, configured to receive the RACH access procedure information reported by the UE through a first Radio Resource Control, RRC, uplink message.

26. A storage medium, wherein the storage medium stores a computer program, and the computer program is configured to execute the information transmission method according to any one of claims 1 to 14 at runtime.

27. An electronic apparatus, comprising a memory and a processor, wherein the memory stores a computer program, and the processor is configured to run the computer program so as to execute the information transmission method according to any one of claims 1 to 14.
